# EUROPEAN PATENT SPECIFICATION

(11) **EP 3 968 803 B1**
(45) Date of publication and mention of the grant of the patent: **05.07.2023**
(21) Application number: 20731952.6
(22) Date of filing: 14.05.2020
(51) Int. Cl.: A41D 13/01

(54) **LUMINOUS CLOTHING ITEM**
LEUCHTENDES KLEIDUNGSSTÜCK
ARTICLE VESTIMENTAIRE LUMINEUX

(30) Priority: 15.05.2019 IT 201900006874
(43) Date of publication of application: 23.03.2022
(73) Proprietor: Geox S.p.A., 31044 Montebelluna (TV) (IT)
(72) Inventor: MORETTI POLEGATO, Mario, 31044 Montebelluna (TV) (IT); BRUNO, Marco, 31044 Montebelluna (TV) (IT); GALLO, Giuliano, 31044 Montebelluna (TV) (IT)
(74) Representative: Biesse S.r.l.
(86) International application number: PCT/IB2020/054553
(87) International publication number: WO 2020/230065

(56) References cited:
- EP-A2- 0 860 801
- US-A1- 2011 075 399

## Description

### Field of the Invention

In its more general aspect, the present invention relates to the technical field of clothing items and in particular the invention relates to a luminous clothing item, where clothing item means herein a clothing item, a clothing accessory, footwear.

### State of the art

Nowadays the known art provides clothing items, in particular outerwear such as blazers, heavy jackets, lightweight jackets, coats and the like, having illuminated portions in order to increase the visibility of the user wearing the clothing item, especially in low light or visibility conditions.

Lighting devices to be combined with clothing items, with the same function of increasing the visibility of the wearer, are also known.

Document EP0860801A2 discloses a luminous clothing item according to the preamble of claim 1.

The patent application US 2017/0143061 A1, for example, describes a clothing item comprising a front zipper at which an optical fiber illuminated by a LED (*Light Emitting Diode)* is placed, the latter being driven by a device controlling its switching on, switching off, color, brightness, wherein the optical fiber is provided with a flange that facilitates the application thereof to the clothing item by stitching or gluing.

However, although the clothing item described in US 2017/0143061 A1 meets the purpose, it suffers from some drawbacks, including rapid high wear of the optical fiber and high risk of fiber breakage due to the optical fiber being exposed to the outside of the clothing item.

An optical fiber exposed on the outside of the clothing item is inevitably exposed to impacts, even accidentally, with external objects that could damage it and also get caught therein.

In addition, an optical fiber exposed on the outside of the clothing item is subjected to the action of dust which in the long run, as known, can ruin the outer surface of the optical fiber, in particular by dulling it.

Moreover, an optical fiber exposed on the outside of a clothing item is subjected to the direct action of ultraviolet (UV) rays contained in solar radiation, which can degrade the material composing the optical fiber, thereby causing the latter, for example, to go yellow and/or dull, with a resulting deterioration in the ability to transmit light.

The patent US 8,142,061 B2 describes a clothing item comprising light guides coupled with LEDs connected to a processor and a battery by cables, wherein the processor and the battery can be both removed to allow the clothing item to be washed, while the light guides, LEDs and cables are all waterproofed.

Also in this case the light guides are arranged on the outside of the clothing item while the LEDs and cables are housed inside the clothing item, and the connection between the outer and inner elements is allowed by through openings made on the outer layer of the clothing item.

Although the clothing item described in US 8,142,061 B2 meets the purpose, it also suffers from some drawbacks, including the undesirable action of dust that can accumulate near the aforementioned through openings and over time can scratch the surface of the light guides, thus affecting their luster, particularly in the neighborhood of the through openings themselves.

In addition, the light guides are exposed, even accidentally, to impact with external objects that could damage them and get caught therein, to the undesirable action of dust that in the long run can ruin the outer surface of the light guides by dulling it and to the direct action of ultraviolet (UV) rays that can degrade the material the light guides are composed of, thereby causing them, for example, to go yellow and/or dull and worsening the ability to transmit light.

The patent application US 2013/0077289 A1 describes a clothing item comprising illuminable ducts placed on the outside of the clothing item, consisting of optical fibers connected to LEDs driven by a control circuit, wherein the connection between the illuminable ducts and the LEDs is made by means of a special connector, while the control circuit and the LEDs are connected by cables to a battery held inside a casing equipped with a USB port for charging the battery.

Also in this case, disadvantageously, the illuminable ducts are exposed, even accidentally, to impact with external objects that could damage them and that could get caught therein, to the action of dust that in the long run can ruin the outer surface by dulling it and to the direct action of ultraviolet (UV) rays that can degrade the material they are composed of, thus reducing the performance thereof.

The patent US 7,506,991 B2 describes a clothing item provided with a light module which is placed on the outside of the clothing item and is activated in response to a movement of the user, wherein the light module is constrained to a waterproof and transparent protective element made of rubber.

Although even the clothing item described in US 7,506,991 B2 meets the purpose, it suffers from some drawbacks, among which the main one is due just to the protective element that, being made of rubber or, more generally, plastic material, does not allow the clothing item to be breathable at the light module, thereby reducing the overall breathability of clothing items made according to the teaching of US 7,506,991 B2.

### Summary of the invention

The technical problem underlying the present invention was to provide a luminous clothing item having structural and functional characteristics able to overcome one or more of the drawbacks mentioned above with reference to the known art.

According to the invention, the aforesaid problem is solved by a luminous clothing item comprising:
an outer layer provided with at least one through opening extending between an outer face and an inner face of the aforesaid outer layer,
at least one luminous duct combined with the aforesaid inner face of the aforesaid outer layer and having at least one first luminous portion at least partially arranged at the aforesaid at least one through opening, and
at least one protective element at least partially transparent to the light emitted by the aforesaid at least one luminous duct, combined with the aforesaid outer layer and placed so as to close the aforesaid at least one through opening,
wherein the aforesaid at least one protective element is water-vapor permeable, i.e. breathable.

Preferably the aforesaid at least one protective element, which in practice is overlapped on the at least one first luminous portion of the at least one luminous duct and protects the luminous portion from the action of external agents, is combined with the aforesaid outer layer by stitching, gluing by thermal bonding or heat sealing, or taping using, preferably, waterproof tapes.

Therefore, according to the invention, a luminous clothing item is provided that ensures protection of the luminous duct from impact, even accidental, with external objects and further ensures the protection of the luminous duct from contact with dust and, further, ensures the protection of the luminous duct from direct exposure to ultraviolet (UV) rays and, further, ensures the escape of sweat in vapor phase thereby helping the natural thermal regulation of a user body.

In addition, according to the invention, a structurally simple and particularly economical luminous clothing item is provided.

Preferably the aforesaid at least one protective element comprises at least one first layer made of a natural or synthetic material, more preferably a fabric or membrane.

Preferably the aforesaid protective element absorbs less than 50% of the light radiation emitted by the aforesaid at least one first luminous portion, more preferably less than 40% of the light radiation emitted by the aforesaid at least one first luminous portion.

Preferably in the aforesaid at least one protective element, which may be combined with the aforesaid outer layer at the aforesaid inner face or the aforesaid outer face, the aforesaid at least one first layer consist of a breathable knit, for example made of polyamide with a density between 120 g/m² and 140 g/m², more preferably of about 130 g/m², or of a waterproof and breathable membrane made of expanded polytetrafluoroethylene (ePTFE), polyurethane or similar waterproof and water-vapor permeable materials.

Preferably, the aforesaid at least one protective element comprises a second layer combined with the aforesaid at least one first layer, wherein the aforesaid second layer is made of a waterproof and breathable material.

Preferably, the aforesaid at least one first layer and the aforesaid second layer are distal from, and proximal to, respectively, the aforesaid at least one first luminous portion of the aforesaid at least one luminous duct.

Preferably the aforesaid second layer consists of expanded polytetrafluoroethylene (ePTFE), polyurethane or the like.

According to the present invention, the combination of a layer of breathable fabric (first layer) and a waterproof and breathable layer (second layer) according to the above, makes it possible to meet the condition required to make visible to an external observer the light emitted by the aforesaid at least one luminous duct, further creating a waterproof protection for the same at least one luminous duct.

Preferably, the aforesaid at least one protective element comprises a third water-vapor permeable layer, i.e. breathable, advantageously made of fabric, combined with the aforesaid second layer on the side opposite the aforesaid at least one first layer, wherein more preferably the aforesaid third layer has a density between 25 g/m² and 35 g/m², even more preferably a density of approximately 30 g/m².

Preferably, the aforesaid third layer comprises polyethylene or polytetrafluoroethylene (PTFE) fibers that reduce the friction of the third layer with the aforesaid at least one luminous duct.

Preferably, the aforesaid luminous clothing item comprises at least one reflecting element arranged on one side of the aforesaid at least one first luminous portion of the aforesaid at least one luminous duct opposite the aforesaid at least one protective element, wherein the aforesaid at least one reflecting element has a reflecting face that reflects the light emitted by the aforesaid at least one first luminous portion of the aforesaid at least one luminous duct, which faces the aforesaid at least one through opening.

Preferably, the aforesaid at least one reflecting element is constrained at respective edges either to the aforesaid inner face of the aforesaid outer layer or to the aforesaid at least one protective element, thereby forming a compartment in which the aforesaid at least one first luminous portion is housed.

Preferably, the aforesaid at least one first luminous portion is substantially cylindrical or semi-cylindrical and more preferably has a diameter or anyway a height greater than 2 mm, more preferably greater than 2.5 mm, even more preferably equal to or greater than 3 mm.

Preferably, the aforesaid at least one luminous duct comprises a connector and a light source combined with the aforesaid connector, which are arranged at an end of the at least one luminous duct, wherein more preferably the aforesaid light source comprises at least one LED (*Light Emitting Diode),* wherein more preferably the LED is either of flat or round type with an emission angle less than or equal to 35°.

Preferably, the aforesaid luminous clothing item comprises at least one control circuit connected by at least one respective cable to the aforesaid light source.

Preferably, the aforesaid at least one luminous duct comprises at least one second luminous portion arranged at a distal position from the aforesaid at least one through opening, the aforesaid at least one second luminous portion being not visible from the aforesaid at least one through opening from a side of the aforesaid outer layer corresponding to the aforesaid outer face.

Preferably, the aforesaid inner face of the aforesaid outer layer consists of a waterproof material at least in a portion surrounding the aforesaid at least one through opening and more preferably is entirely made of a waterproof material.

Preferably, the aforesaid at least one protective element is hermetically sealed, i.e. so as to be waterproof, to the aforesaid at least one waterproof portion of the aforesaid inner face.

Preferably, the aforesaid luminous clothing item comprises an inner layer combined with the aforesaid inner face of the aforesaid outer layer, in practice a lining.

Preferably, the aforesaid at least one luminous duct comprises at least one third luminous portion visible from one side of the aforesaid inner layer opposite the aforesaid outer layer, the aforesaid inner layer being provided with at least one window or comprising a plurality of inner layer portions that leave at least one portion of the aforesaid inner face of the aforesaid outer layer uncovered at the aforesaid at least one third luminous portion.

Preferably, the aforesaid luminous clothing item comprises fastening means adapted to constrain the aforesaid at least one luminous duct to the aforesaid inner face of the aforesaid outer layer, wherein more preferably the aforesaid fastening means comprise at least one fastening element comprising, or consisting of, a strip of fabric or polymeric material.

Preferably, the aforesaid strip of fabric or polymeric material is folded on itself and constrained to the aforesaid inner face of the aforesaid outer layer in order to form a sleeve, wherein the aforesaid sleeve is engaged, i.e. traversed, by the aforesaid at least one luminous duct, or wherein the aforesaid strip of fabric or polymeric material has a face constrained at opposite edges to the aforesaid inner face of the aforesaid outer layer and is provided with at least two through holes engaged by the aforesaid at least one luminous duct.

Preferably, the aforesaid at least one luminous duct is made of polymeric material, transparent or semi-transparent to light as mentioned above, and more preferably the aforesaid at least one luminous duct comprises one or more optical fibers, of the type commonly used in telecommunications as means for transmitting optical signals, or alternatively the aforesaid at least one luminous duct can be made of an electroluminescent material which is illuminated when electric current flows therethrough, in this second case no light source being required to illuminate the aforesaid at least one luminous duct.

Preferably, the aforesaid one or more optical fibers are made of a polymeric material selected from the group comprising polymethyl methacrylate (PMMA), polyurethane (PU), polyvinyl chloride (PVC), polyester, polystyrene, thermoplastic polyurethane (TPU), in which polyurethane composed of an isocyanate, e.g. diisocyanate, and polyol polyether, is particularly suitable for transmitting light from the side surface of the aforesaid at least one luminous duct, particularly from the aforesaid at least one first luminous portion.

Preferably, the aforesaid luminous clothing item is selected from the group comprising clothing items, clothing accessories, footwear, in which more preferably the aforesaid luminous clothing item is a blazer, a heavy jacket, a lightweight jacket, a coat, a sleeveless garment, a waistcoat, a tracksuit, trousers, head gear, a glove, a shoe.

### Brief description of the figures

Further characteristics and advantages of the invention will be better highlighted by considering the following detailed description of some preferred, but not exclusive, embodiments illustrated by way of example only and without limitations, with the aid of the accompanying drawings, in which:
- figure 1 schematically shows an outer front view of a luminous clothing item in the form of a blazer, comprising a plurality of luminous ducts and a respective plurality of protective elements, according to the present invention;
- figure 2 shows an outer rear view of the luminous clothing item of figure 1;
- figure 3 schematically shows a perspective view of a detail of the luminous clothing item of figure 1;
- figures 4 and 5 schematically show respective sectional views of the detail of the luminous clothing item olf figure 3, according to two different configurations of a protective element of the luminous clothing item of figure 1;
- figure 6 schematically shows a front view of a luminous duct of the luminous clothing item of figure 1;
- figure 7 schematically shows a partially cut-away inner view of the luminous clothing item of figure 1, lying on a flat surface and without the sleeves;
- figure 8 schematically shows an outer view of the luminous clothing item of figure 1, lying on a flat surface and without the sleeves;
- figures 9 and 10 schematically show a detail of the luminous clothing item of figure 1, according to two different embodiments of fastening means of a luminous duct of the luminous clothing item of figure 1;
- figure 11 schematically shows a partially cut-away inner view of the luminous clothing item of figure 1, lying on a flat surface and without the sleeves, according to an embodiment variation of the present invention;
- figure 12 schematically shows a perspective view of a luminous clothing item in the form of footwear comprising a sole and an upper assembly, according to an embodiment variation of the present invention;
- figure 13 schematically shows a detail of the luminous clothing item of figure 12, in which a detail of the upper assembly is shown lain on a flat surface;
- figure 14 schematically shows a perspective view of a luminous clothing item in the form of head gear, according to an embodiment variation of the present invention;
- figure 15 schematically shows a side view of a luminous clothing item in the form of glove, according to an embodiment variation of the present invention.

### Detailed description of the invention

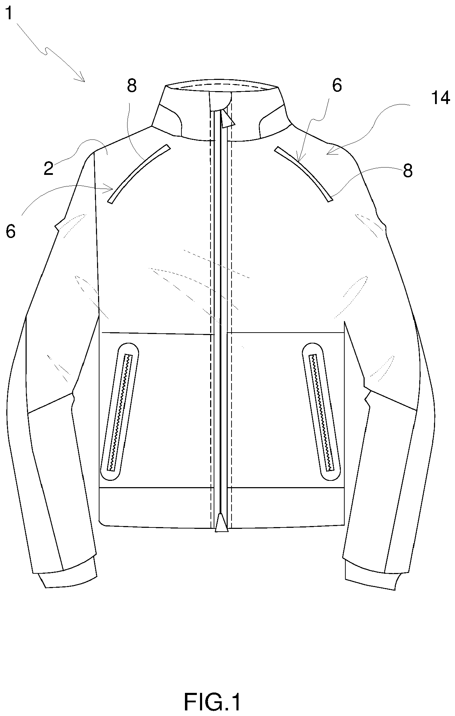

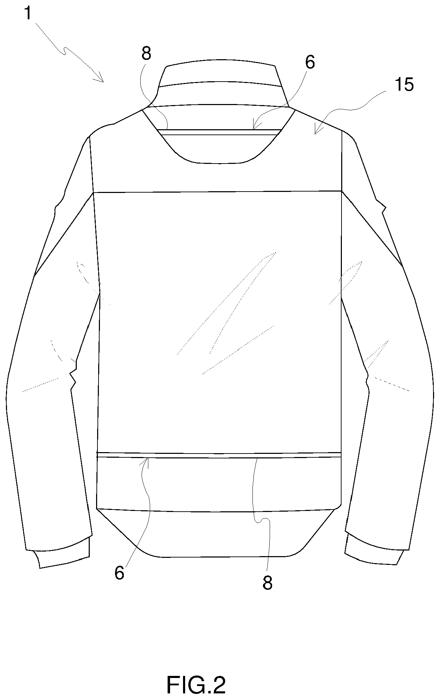

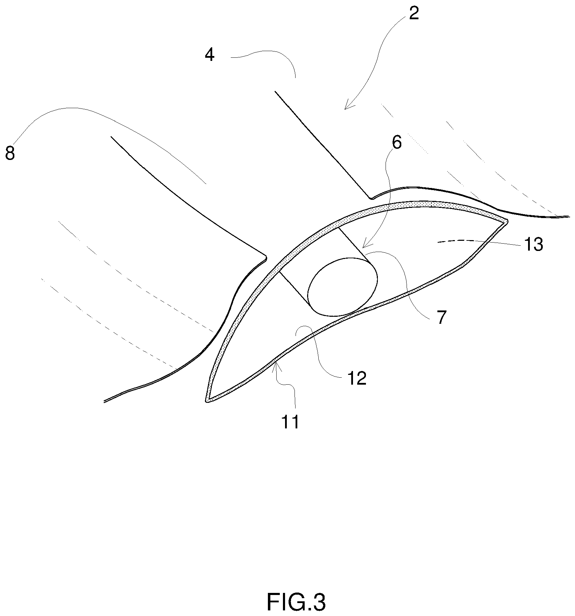

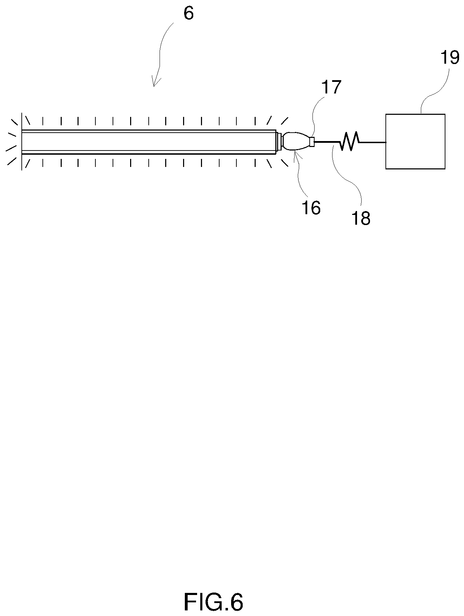

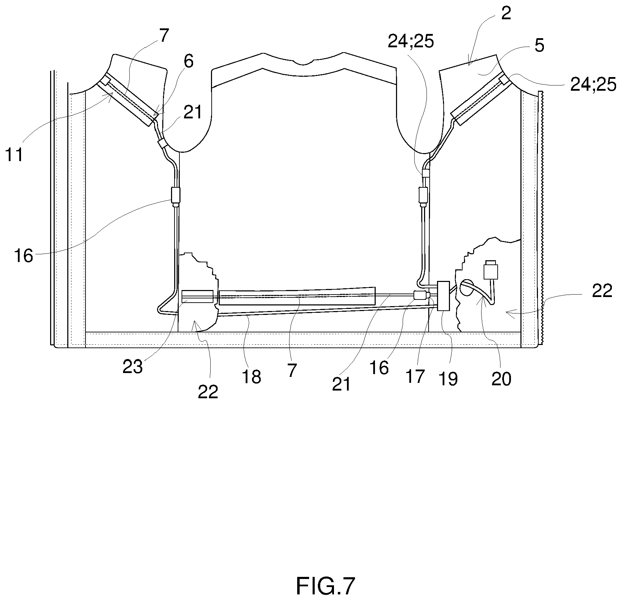

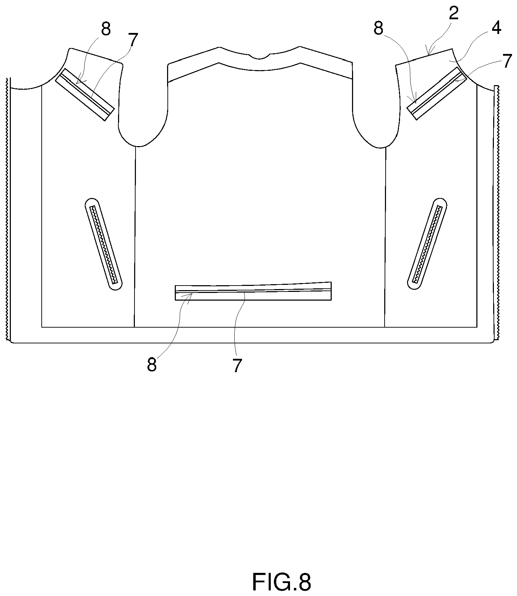

Referring to figures 1-10, a luminous clothing item according to the present invention, specifically a clothing item such as a blazer, is generally denoted by the numeral **1.**

According to the invention, the luminous clothing item **1** essentially comprises an outer layer **2** provided with a plurality of through openings, each denoted by the numeral **3,** extending between an outer face **4** and an inner face **5** of the outer layer **2,** a plurality of luminous ducts, each denoted by the numeral **6,** combined with the inner face **5** and each having a first luminous portion **7** arranged at a respective through opening **3,** and a plurality of protective elements, each denoted by the numeral **8,** combined with the outer layer **2** and each placed so as to close a respective through opening **3,** wherein the protective elements **8** are at least partially transparent to the light emitted by the luminous ducts **6** and water-vapor permeable.

At least partially transparent to the light emitted by the luminous ducts means that the protective elements **8** are made of one or more materials which are transparent or translucent to the light emitted by the luminous ducts **6,** to an extent sufficient to make the light emitted by the same luminous ducts **6** visible to an external observer.

In general, named U the radiation (to be intended as radiant energy per time unit per surface unit) incident on a body, it splits off into three components: a part is reflected, a part is absorbed and a part is transmitted through the body. A material is transparent to light if most of the incident radiation (light) is transmitted through it, while it is translucent if most of the radiation (light) passing through it is diffused (*scattering phenomenon:* the electromagnetic waves change trajectory in a disorderly and random way). On the other hand, an opaque material absorbs radiation (light) and does not transmit it. In order to make the light emitted by the first luminous portions of the aforesaid luminous ducts visible to an external observer, the light absorbed by the material or materials constituting the aforesaid protective elements must not exceed a determined threshold value. This condition is satisfied if the radiation absorbed by a protective element is less than 50% of the radiation emitted in the form of light by a respective first luminous portion, absorption of less than 40% being preferred.

With regard to water-vapor permeability of the aforesaid protective elements, it should be mentioned that it is determined according to the methodology set forth in Chapter 6.6 of the regulation ISO 20344-2004. The regulation ISO 20344-2004, in chapter 6.6 *"Determination of water vapor permeability",* relating to safety footwear, describes a testing method consisting of fastening a specimen of a material to be tested so as to close the opening of a bottle containing a certain amount of solid desiccant, in particular silica gel. The bottle is subjected to strong airflow under conditioned atmosphere. The bottle is rotated so as to mix the solid desiccant and optimize its drying action of the air contained in the bottle. The bottle is weighed before and after the test period to determine the mass of moisture that has passed through the material to be tested and has been absorbed by the solid desiccant. The water-vapor permeability, expressed in milligrams per square centimeter per hour [mg/cm²·h], is then calculated on the basis of the measured mass of moisture, the region of the bottle opening, and the test time. The expressions "water-vapor permeable", "vapor permeable" and "breathable" are used with the same meaning.

The water-vapor permeability of the protective elements 8 is preferably of at least 2 mg/cm²·h, more preferably of at least 5 mg/cm²·h, even more preferably of at least 20 mg/cm²·h.

According to the above and according to the present invention, the protective elements **8,** practically overlapping respective portions of the luminous ducts **6** and protecting the first luminous portions **7** of the luminous ducts **6** from the action of external agents, are combined with the outer layer **2** by stitching, gluing by thermal bonding or heat sealing, or taping using, preferably, waterproof tapes.

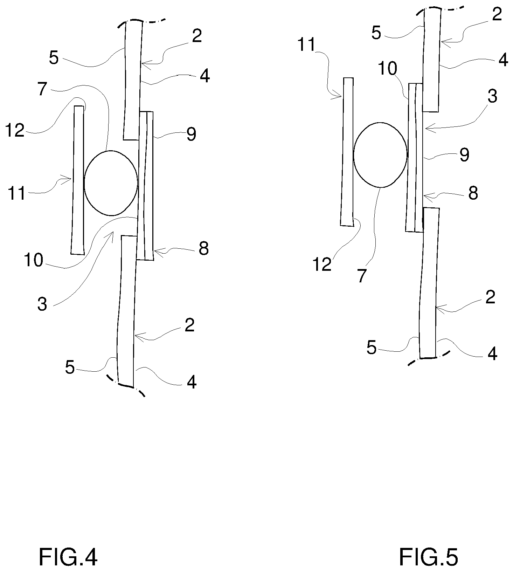

In particular, the protective elements **8,** which in the clothing item **1** may be equal to each other or different from each other and can be combined with the outer face **4** or the inner face **5** of the outer layer **2,** as shown in the examples in figures 4 and 5, respectively, each comprise at least one first water-vapor-permeable layer denoted by the numeral **9** preferably made of natural or synthetic fabric and more preferably consisting of a breathable knit made of polyamide with a density between 120 g/m² and 140 g/m², even more preferably of about 130 g/m², or preferably made of a membrane consisting of expanded polytetrafluoroethylene (ePTFE), polyurethane or the like.

It should be noted that the inner face **5** of the outer layer **2** preferably consists of waterproof material at least in a portion surrounding the through openings **3** and that the protective elements **8** are preferably hermetically sealed, i.e. so as to be waterproof, to the waterproof portions of the inner face **5.**

It should also be noted that the inner face **5** of the outer layer **2** can be provided entirely in waterproof material, but protection elements **8** made of, or comprising, a waterproof and breathable material, which are sealed to the inner face **5** of the outer layer **2,** can be provided as well, thereby obtaining waterproof sealing if a luminous clothing item totally waterproof is required.

According to the examples of the aforesaid figures, each protective element **8** also comprises a second layer **10** combined with a respective first layer **9** and made of waterproof and breathable material, although, according to the present invention and in accordance with the above, there is also the possibility of providing protective elements consisting only of the first breathable, and possibly also waterproof, layer and therefore consisting of a natural or synthetic fabric or a membrane.

In any case, if the second layer **10** is provided, there is to be said that it is joined to the first layer **9** preferably by means of glue points and still preferably it consists of a membrane made of expanded polytetrafluoroethylene (ePTFE), polyurethane or the like.

In detail, in a protective element **8,** the first layer **9** and the second layer **10** are arranged respectively distal from, and proximal to, the first luminous portion **7** of a respective luminous duct **6.**

It should be noted that the combination of a layer of breathable fabric (first layer) and a waterproof and breathable layer (second layer) according to the above, makes it possible to meet the condition required to make visible to an external observer the light emitted by the aforesaid luminous ducts, while creating a waterproof and breathable protection for the same luminous ducts.

According to an embodiment variation of the invention, not shown in the examples of the figures, a protective element of the aforesaid type may also comprise a third water-vapor permeable layer combined with the second layer on the side opposite the first layer and having a density between 25 g/m² and 35 g/m², preferably a density of about 30 g/m².

In the aforesaid embodiment variation the third layer is preferably made of fabric, more preferably comprising polyethylene or polytetrafluoroethylene (PTFE) fibers which reduce friction of the third layer with the respective luminous duct.

According to the present invention and in accordance with the examples of the aforesaid figures, the luminous clothing item **1** also comprises a plurality of reflecting elements, preferably a reflecting element **11** per each first luminous portion **7.**

In particular, each reflecting element **11** is arranged on one side of a corresponding first luminous portion **7** opposite the protective element **8,** and has a reflecting face **12** adapted to reflect the light emitted by the corresponding first luminous portion **7** facing the through opening **3.**

The reflecting faces **12** of the reflecting elements **11** can consist of the material known under the trade name Scotchlite^{™} from 3M (Minnesota Mining and Manufacturing Company, USA) or the material known under the trade name Retrolux^{®} from IRC Spa (Soliera, Modena - Italy).

The reflecting elements **11** are advantageous because they increase the visibility of the luminous clothing item **1** by reflecting outwards that portion of light that is emitted by the luminous ducts **6** and particularly by the first luminous portions **7** of the latter and that is directed towards the inside of the luminous clothing item **1.**

Moreover, according to the invention, it should be added that preferably each reflecting element **11** is constrained to the inner face **5** of the outer layer **2** or to a respective protective element **8** at respective edges, in any case forming a compartment **13** in which a respective first luminous portion **7** is housed, this configuration implementing the aforementioned waterproof sealing.

In this respect it should be mentioned that the first luminous portions 7 are preferably cylindrically or semi-cylindrically shaped with diameter or in any case with height greater than 2 mm, more preferably greater than 2,5 mm, even more preferably equal to or greater than 3 mm.

Even though, with use, the first luminous portions **7** shown above are no longer perfectly aligned with the respective protective elements **8,** thanks to the dimensions of the first luminous portions 7 themselves the light they emit can be sufficiently visible. In practice, according to the above, a significant portion of the light emitted by the luminous ducts **6** has to reach the reflecting elements **11** to be reflected and pass through the protective elements **8.**

As regards more generally the luminous clothing item **1,** it should be mentioned that according to the examples of the aforesaid figures, it comprises a front portion **14** comprising two luminous ducts **6** arranged inside the outer layer **2** near the chest.

In particular, with respect to the normal condition of use of the blazer constituting the luminous clothing item **1,** the luminous ducts **6** combined with the front portion **14** are diagonally arranged, with a downward inclination, along a direction that starts from the neck and goes towards the hips.

In addition, the luminous clothing item **1** comprises a rear portion **15** comprising a luminous duct **6** placed on the lower part of the back and a luminous duct **6** placed at the nape of the neck.

It should be mentioned that in general the luminous ducts can be oriented in the most convenient direction with respect to the normal condition of use of the luminous clothing item according to the present invention, for example horizontal or vertical, as required.

With regard to the luminous ducts **6** in detail, it should be mentioned that they are made of polymeric material, transparent or semi-transparent as mentioned above, and preferably each of them comprises one or more optical fibers, of the type commonly used in telecommunications as transmitting means of optical signals, the optical fibers being made of a polymeric material selected by the group including polymethylmethacrylate (PMMA), polyurethane (PU), polyvinyl chloride (PVC), polyester, polystyrene, thermoplastic polyurethane (TPU), or alternatively luminous ducts can be made of electroluminescent materials which are illuminated when electric current flows therethrough. This way, no light sources are required to illuminate the luminous ducts.

Polyurethane composed of an isocyanate, e.g. diisocyanate, and polyol polyether, is particularly suitable for transmitting light from the side surface of the luminous ducts **6,** as will become more evident hereafter.

Furthermore, the optical fibers may either be uncoated or they may comprise a core, with a first light refractive index n₁, and a core cladding made of a material with a second refractive index n₂ other than n₁, where n₁ is usually slightly higher than n₂ so as to obtain an acceptance angle (i.e. the maximum angle at which light can enter the optical fiber and remain inside it) large enough without having a too small critical angle (a condition that would force the light to strongly zigzag inside the optical fiber thus increasing the transmission delay of the different wavelengths).

As regards the luminous ducts **6,** it should be mentioned that, according to the examples of the aforesaid figures, each of them comprises a connector **16** and a light source **17** combined with the connector **16,** which are both arranged at one end of the luminous duct **6,** wherein preferably the light source **17** comprises one or more LEDs (*Light Emitting Diode),* even though, as mentioned above, luminous ducts made of electroluminescent material that does not need any light source to be illuminated can be provided.

In particular, the connectors **16** can be fastened on the inner face **5** of the outer layer **2,** for example by means of stitched or adhered flanges, so that their accidental displacement, which could cause annoyance to the user or breakage of some components, is prevented, whereas for the ends of the luminous ducts **6** it should be mentioned that they are not placed at the through openings **3,** which in practice are windows open on the outer layer **2,** but, for example, are misaligned from the through openings **3,** i.e. hidden with respect to an observer who sees almost frontally the luminous clothing item **1,** i. e. from the outer layer **2** at the front portion **14.** This way, the outer layer **2** in some way conceals also the light sources **17.**

This configuration is advantageous because the point light emitted by the light sources **17,** which instead could create inhomogeneity and/or dazzle an observer, does not overlap the light emitted by the first light portions 7 of the luminous ducts **6,** which is instead almost homogeneous.

The light sources **17** of the luminous ducts **6** are further connected by means of respective cables **18** to the same control circuit **19** the luminous clothing item **1** is provided with, however, there is also the possibility of providing several control circuits, e.g. one control circuit per each luminous duct.

The control circuit **19,** of a known type, controls the switching on and off, the color, the brightness, for example, even by predefined light patterns of the light sources **17.**

It should be mentioned that preferably the control circuit **19** comprises a wireless transmission module, for example *Bluetooth,* by which it interfaces with a remote device, for example a smartphone, through which it is controlled for example via an APP, the wireless transmission module not being shown in the examples of the aforesaid figures.

It should be mentioned, moreover, that the luminous clothing item **1** comprises a power source of known type, e.g. a rechargeable battery, and/or a connection port, preferably a USB type plug, to be connected for example to a *power bank,* i.e. an external self-powered portable battery-charger, in order to provide the energy required for the operation of the light sources **17,** wherein the aforesaid power source and/or the aforesaid connection port are connected to the control circuit **19** by cables. In particular, according to the examples of the aforesaid figures, in the luminous clothing item **1** the aforesaid cables and the aforesaid connection port are denoted as a whole by the numeral **20.**

According to the above with regard to the luminous ducts **6** it should be added that each of them preferably comprises a second light portion **21** arranged in a position distal from the respective through opening **3,** i .e. not aligned with the respective through opening **3.**

In other words, the second luminous portions **21** are not visible from the openings **3** seen from one side of the outer layer **2** corresponding to the front portion of the outer face **4.**

In accordance with the examples of the aforesaid figures, it should be added that the luminous clothing item according to the present invention preferably also comprises an inner layer **22** combined with the inner face **5** of the outer layer **2,** in practice a lining intended to be in contact with the user, whereas at least one luminous duct **6** of the aforesaid plurality of luminous ducts comprises a third luminous portion **23** visible from one side of the inner layer **22** opposite the outer layer **2.**

In practice, according to the above, the inner layer **22** is provided with at least one window for the third luminous portion **23,** or it comprises a plurality of portions of inner layer which leave uncovered at least one portion of the inner face 5 of the outer layer **2** at the third luminous portion **23.**

The third luminous portion **23** is, so to speak, interposed between the inner layer **22** and the user's body and allows the luminous clothing item **1** to be illuminated inside, for example at an inner pocket, thus facilitating the search for objects stored therein in poor visibility conditions. The third luminous portion **23** is therefore preferably a portion of the luminous duct **6** arranged on the lower part of the back of the luminous clothing item **1.**

In accordance with the examples of the aforesaid figures, it should be added that preferably the luminous clothing item according to the present invention comprises fastening means adapted to hold the luminous ducts **6** in place on the inner face **5** of the outer layer **2,** the fastening means comprising a plurality of fastening elements comprising, or consisting of, a strip of fabric or polymeric material.

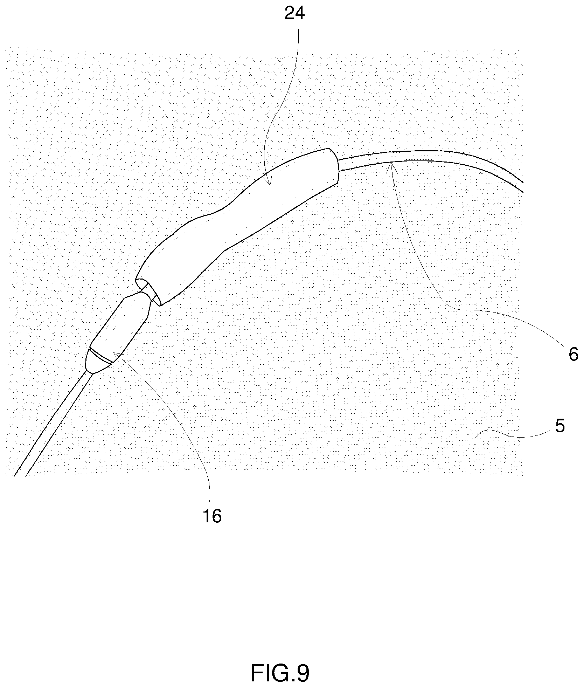

In detail, the example in figure 9 shows a first embodiment of the aforesaid fastening means wherein, in a fastening element **24,** the strip of fabric or polymeric material is joined to the inside of the outer layer **2** according to known techniques, precisely folded on itself and constrained to the inner face **5** of the outer layer **2** to form a sleeve which is engaged, i.e. traversed, by a respective luminous duct **6** to hold in position the same luminous duct **6** near the respective connector **16.**

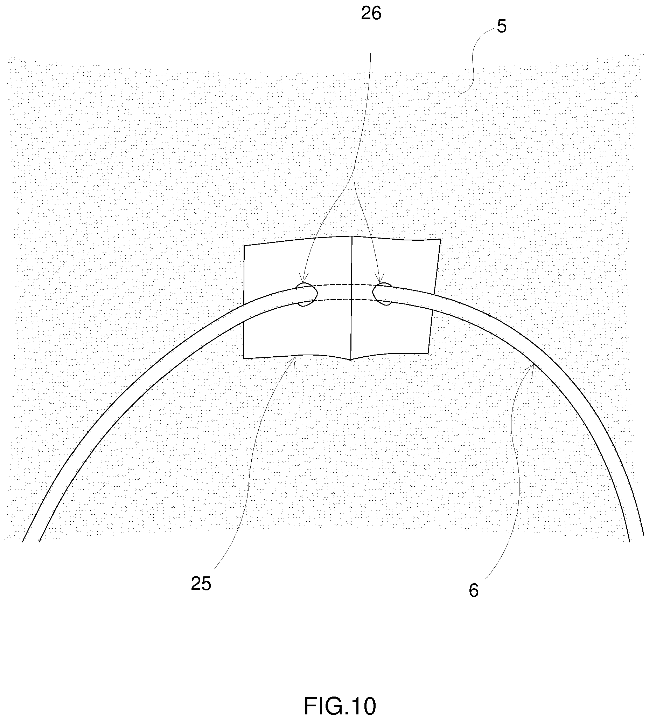

In the example in figure 10 a second embodiment of the aforesaid fastening means is shown, wherein in a fastening element **25** the strip of fabric or polymeric material has a face constrained, according to known techniques, to the inner face **5** of the outer layer **2** at opposite edges, while an opposite face of the strip of fabric or polymeric material faces the user's body.

In this second embodiment the fastening element **25,** and specifically the strip of fabric or polymeric material, is provided with two through holes **26** engaged by the luminous duct **6.**

It should be noted that, advantageously, the fastening element **25** has a substantially quadrangular shape with two shorter sides, while the material it is made of can basically be selected at will or in any case in relation to the material of the luminous duct or the portion of the luminous duct combined with the fastening element **25,** so as to have substantially a desired value of the coefficient of friction to limit the sliding of the luminous ducts **6.**

It should be noted, as well, according to the example in figure 10, that the luminous duct **6** is interposed between the fastening element **25** and outer layer **2** at the short sides of the strip of fabric or polymeric material. This increases the contact surface between the fastening element **25** and the luminous duct **6** and therefore increases friction, thus allowing the sliding of luminous duct **6** with respect to the fastening element **25** to be limited even if the latter is made of a very thin strip of fabric or polymeric material in order to prevent undesired stiffening and/or swelling of the luminous clothing item **1.**

Of course, the fastening means of the luminous clothing item **1** may comprise fastening elements **24** and/or fastening elements **25.**

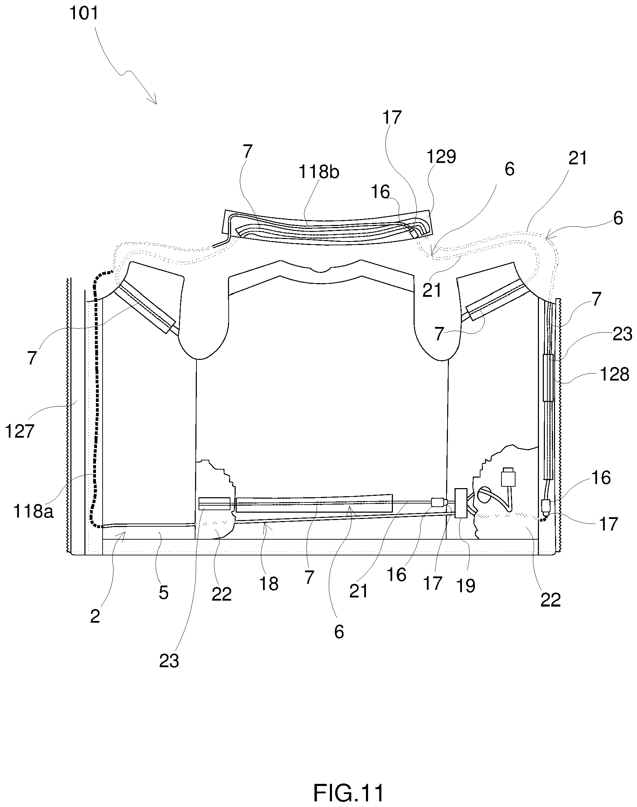

Referring to the example of figure 11, an embodiment variation of the present invention is now described, wherein parts structurally and functionally corresponding to those of the luminous clothing item **1** described above have reference numerals same as those used in figures 1-10.

In detail, the example in figure 11 shows a portion of a luminous clothing item **101,** in the form of a blazer, which is very similar to the above-described luminous clothing item **1** whose description has to be used as reference, the former being different from the latter essentially in that portions of the luminous clothing item **101** located in different regions are illuminated by using the same luminous duct and a single light source, and in that there are no electric cables to connect the light sources to the control circuit at the sides of the luminous clothing item.

In particular, the luminous clothing item **101** comprises a control circuit **19** and a luminous duct **6** (first luminous duct) which comprises a first luminous portion **7** arranged near the chest and which is connected to the control circuit **19** by cables **18.**

The luminous clothing item **101** comprises, on a front portion, two opposite edges, a first edge **127** and a second edge **128** which can be coupled to each other, e.g. by means of a zipper, and the aforesaid cables **18** comprise a first portion **118a** running at the first edge **127,** and a second portion **118b** joined to the first portion **118a** and placed at a neck portion **129** of the luminous clothing item **101.**

The second portion **118b** of the cables **18** leads current to a connector **16** at which a light source **17,** for example a LED, is placed which illuminates the aforesaid luminous duct **6** having the first portion 7 arranged near the chest.

In accordance with the example in figure 11, the aforesaid luminous duct **6** (first luminous duct) also comprises a second luminous portion **21** similar to the second luminous portion previously illustrated with reference to the luminous clothing item **1,** whose description has to be used as reference.

As mentioned above, thanks to this solution, the passage of cables at the sides of the luminous clothing item **101** can be eliminated, thus advantageously providing greater comfort to the user.

According to the invention, the luminous clothing item **101** also comprises a luminous duct **6** (second luminous duct) having a plurality of first luminous portions **7** substantially similar to the first luminous portions previously illustrated with reference to luminous clothing item **1,** whose description has to be used as reference.

In detail of the first luminous portions **7** of the luminous duct **6** (second luminous duct), one is placed at the second edge **128,** one is placed at the aforesaid neck portion **129** and one is placed near the chest of the luminous clothing item **101.**

The aforesaid luminous duct **6** (second luminous duct) also comprises a connector **16** at which a light source **17,** e.g. a LED, which illuminates the same luminous duct **6** is placed.

The luminous duct **6** (second luminous duct) also comprises a second luminous portion **21** similar to the second luminous portion previously illustrated with reference to the luminous clothing item **1,** whose description has to be used as reference.

The luminous duct **6** (second luminous duct) also comprises a third luminous portion **23** similar to the third luminous portion previously illustrated with reference to the luminous clothing item **1,** whose description has to be used as reference.

Therefore, according to the above, the luminous clothing item **101** also comprises an outer layer **2** provided with through openings extending between an outer face and an inner face **5,** and an inner layer **22,** i.e. a lining, coupled to the outer layer **2,** to which applies the above description referred to the luminous clothing item **1.**

In general, unless otherwise specified, what has been previously described and illustrated for the luminous clothing item **1** applies to the luminous clothing item **101.**

As mentioned above, the embodiment according to the example in figure 11 is advantageous because it allows to illuminate portions of the luminous clothing item according to the present invention, which are placed in different regions by using only one luminous duct and only one light source, thus also reducing the use of electric cables and simplifying the construction of the luminous clothing item, which therefore becomes particularly cost effective and highly comfortable.

In accordance with the present invention it is to be mentioned that the present luminous clothing item illustrated above as a clothing item in the form of a blazer can alternatively be a heavy jacket, a lightweight jacket, a coat, a sleeveless garment, a waistcoat, a tracksuit, trousers or another clothing item, as well as a clothing accessory such as for example head gear or a glove, and can also be footwear.

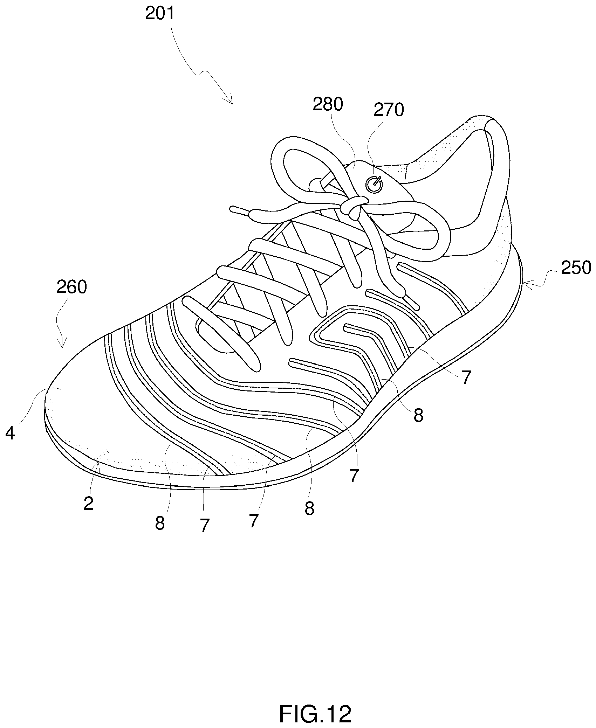

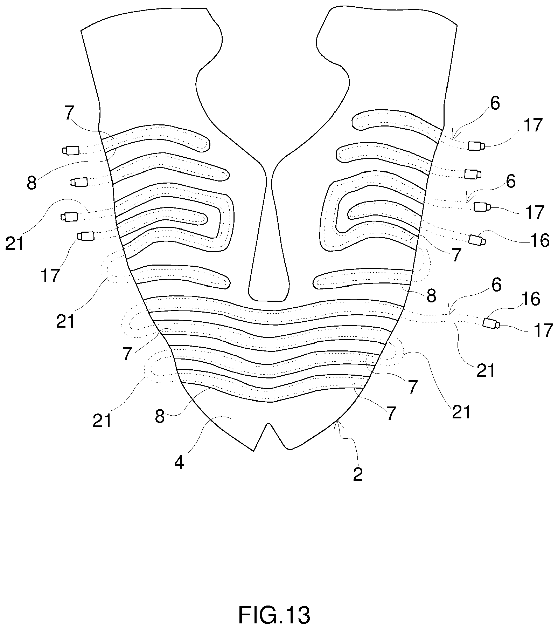

Concerning that point, referring to the example of figures 12 and 13, an embodiment variation of the present invention is now described, in which parts structurally and functionally corresponding to those of the luminous clothing items **1** and **101** described above have reference numerals same as those previously used.

In detail, the examples of figures 12 and 13 show a luminous clothing item in the form of footwear, denoted by the numeral **201,** comprising a sole **250** joined to an upper assembly **260.**

The upper assembly **260** comprises an outer layer **2** provided with a plurality of through openings extending between an outer face **4** and an inner face of the outer layer **2** at which respective protective elements **8** are arranged to close the through openings and cover first luminous portions **7** of respective luminous ducts 6, wherein the protective elements comprise a first layer of breathable material at least partially transparent to the light emitted by the luminous ducts.

The luminous clothing item **201** also comprises a plurality of reflecting elements substantially arranged at the first luminous portions **7,** to which applies the above description referred to the luminous clothing items **1** and **101.**

In general, the protective elements, as well as the luminous ducts and reflecting elements have number and shape that can be selected as required.

As set forth above, for example, in the luminous clothing item **201** some luminous ducts **6** may comprise a plurality of first luminous portions **7** visible from the outside of the footwear, alternated with second luminous portions **21** not visible from the outside of the footwear, all powered by a single light source **17** with a single connector **16.**

In this case, advantageously, end portions of the luminous ducts **6,** where the respective light sources **17** and the respective connectors **16** are arranged, are housed in proper cavities, not shown in the aforesaid figures, obtained in the sole **250** of the luminous clothing item **201** in form of footwear.

It should be added that, advantageously, the connectors **16** can be transparent or semi-transparent so that the light sources **17** can also illuminate portions of the sole **250.**

Finally, advantageously, the luminous clothing item **201** also comprises a button **270** conveniently placed at a tongue **280,** in order to drive that the luminous ducts **6** are switched on, off and/or that they perform luminous patterns.

In general, unless otherwise specified and as far as comparable, what has been previously described and illustrated for the luminous clothing items **1** and **101** applies to the luminous clothing item **201.**

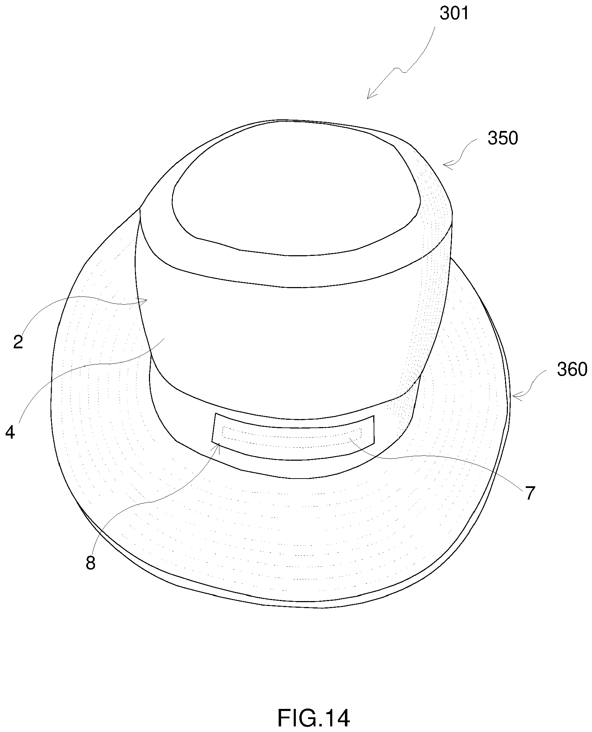

Referring to the example in figure 14, an embodiment variation of the present invention is now described, wherein parts structurally and functionally corresponding to those of the luminous clothing items **1, 101** and **201** described above have reference numerals same as those previously used.

In detail, the example in figure 14 shows a luminous clothing item **301,** in the form of head gear, comprising a crown **350** and a brim **360.**

In particular, the crown **350** comprises an outer layer **2** provided with a through opening extending between an outer face **4** and an inner face of the outer layer **2,** at which a first luminous portion **7** of a luminous duct and a protective element **8** closing the through opening and covering the first luminous portion **7** are arranged, wherein the protective element comprises a first layer of breathable material which is and transparent or translucent to the light emitted by the luminous duct.

According to the invention, the first luminous portion **7** is arranged inward with respect to the outer layer **2.**

A reflecting element combined with the first light portion **7** is arranged on the opposite side with respect to the protective element **8.**

In general, unless otherwise specified and as far as comparable, what has been previously described and illustrated for the luminous clothing items **1, 101** and **201** applies to the luminous clothing item **301.**

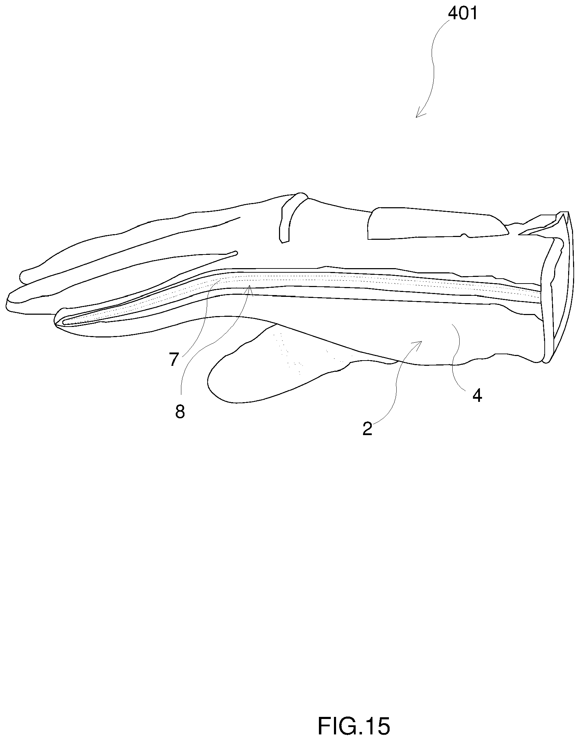

Referring to the example in figure 15, an embodiment variation of the present invention is now described, wherein parts structurally and functionally corresponding to those of the luminous clothing items **1, 101, 201** and **301** described above have reference numerals same as those previously used.

In detail, the example in figure 15 shows a luminous clothing item **401,** in the form of a glove, comprising an outer layer **2** provided with a through opening extending between an outer face **4** and an inner face of the outer layer **2,** at which a first luminous portion **7** of a luminous duct is placed.

According to the invention, the first luminous portion **7** is arranged inward with respect to the outer layer **2** and is covered by a protective element **8** comprising a first transparent or translucent layer of breathable material, combined with the outer layer **2** at the through opening **3.**

A reflecting element combined with the first luminous portion **7** is arranged on the opposite side with respect to the protective element **8.**

In general, unless otherwise specified and as far as comparable, what has been previously described and illustrated for the luminous clothing items **1, 201** and **301** applies to the luminous clothing item **401.**

In accordance with the invention, in some preferred embodiments of the present luminous clothing item, not illustrated in the examples of the figures and true for all the luminous clothing items described above, in the aforesaid protective element, which as mentioned comprises at least one first breathable layer preferably made of fabric, and more preferably also comprises a second functional waterproof and breathable layer, the first layer, which is the outermost layer of the protective element, may be provided with openings, for example circular or elongated.

At these openings the light emitted by the first luminous portions of the luminous ducts comes out more with respect to the remaining portion of the first luminous portions and can define text, logos and/or ornaments, thus giving greater performing freedom and greater stylistic variety to the luminous clothing item according to the present invention.

The advantages of the present invention, which became clear in the course of the above description, can be summarized by pointing out that a luminous clothing item comprising at least one luminous duct is provided which, by means of at least one respective protective element, is safeguarded from dust and direct impact against external objects, without jeopardizing the transpiration of the luminous clothing item. In addition, the at least one protective element prevents the at least one luminous duct from offering a handhold for objects such as handles, hooks or the like. Furthermore, the at least one protective element prevents dirt from creeping between the at least one luminous duct and the surface the latter is combined with. In addition, the at least one protective element protects the at least one luminous duct from the direct action of ultraviolet (UV) rays to the desired extent depending on the selection of materials used.

Furthermore, advantageously, a protective element having a layer of fabric or ePTFE in contact with the luminous duct partially or fully prevents adhesion between the protective element and the luminous duct, thus preventing the latter from being subjected to excessive tension, especially as a result of certain movements of the user. In order to prevent the luminous duct from breaking or becoming locally dull due to excessive tension values, e.g. close to yield strength, excessive tension must be avoided.

A technician of the field will be able to carry out numerous variations and modifications to the present invention in the embodiments shown and described, in order to satisfy contingent and specific needs, all however included within the scope of protection of the invention as defined in the following claims.

## Claims

1. Luminous clothing item (1) comprising:
an outer layer (2) provided with at least one through opening (3) extending between an outer face (4) and an inner face (5) of said outer layer (2),
at least one luminous duct (6) combined with said inner face (5) of said outer layer (2) and having at least one first luminous portion (7) at least partially arranged at said at least one through opening (3), and
at least one protective element (8) at least partially transparent to the light emitted by said at least one luminous duct (6), combined with said outer layer (2) and placed so as to close said at least one through opening (3),
**characterized in that**
said at least one protective element (8) is water-vapor permeable.

2. Item according to claim 1, wherein said at least one protective element (8) comprises at least one first layer (9) made of a natural or synthetic material.

3. Item according to claim 2, wherein said at least one first layer (9) is a breathable fabric or a waterproof and breathable membrane, preferably of polyamide or expanded polytetrafluoroethylene (ePTFE), polyurethane or the like.

4. Item according to claim 2 or 3, wherein said at least one protective element (8) comprises a second layer (10) combined with said at least one first layer (9), wherein said second layer (10) is made of a waterproof and breathable material, wherein preferably said at least one first layer (9) and said second layer (10) are distal from, and proximal to, respectively, said at least one first luminous portion (7) of said at least one luminous duct (6), wherein more preferably said at least one first layer (9) is constituted by polyamide with a density between 120 g/m² and 140 g/m² or by expanded polytetrafluoroethylene (ePTFE) and/or said second layer (10) is constituted by expanded polytetrafluoroethylene (ePTFE), polyurethane or the like.

5. Item according to any one of the preceding claims, wherein said at least one protective element (8) absorbs less than 50% of the light radiation emitted by said at least one first luminous portion (7), preferably less than 40% of the light radiation emitted by said at least one first luminous portion.

6. Item according to any one of the preceding claims, comprising at least one reflecting element (11) arranged on one side of said at least one first luminous portion (7) of said at least one luminous duct (6) opposite said at least one protective element (8), in which said at least one reflecting element (11) has a reflecting face (12) that reflects the light emitted by said at least one first luminous portion (7) which faces said at least one through opening (3).

7. Item according to claim 6, wherein said at least one reflecting element (11) is constrained at respective edges either to said inner face (5) of said outer layer (2) or to said at least one protective element (8), thereby forming a compartment (13) in which said at least one first luminous portion (7) is housed.

8. Item according to any one of the preceding claims, wherein said at least one first luminous portion (7) is substantially cylindrical or semi-cylindrical, wherein preferably said at least one first luminous portion (7) has a diameter greater than 2 mm, more preferably greater than 2,5 mm, even more preferably equal to or greater than 3 mm.

9. Item according to any one of the preceding claims, wherein said at least one luminous duct (6) comprises a connector (16) and a light source (17) combined with said connector, which are both arranged at one end of said at least one luminous duct (6), wherein preferably said light source (17) comprises at least one LED.

10. Item according to claim 9, comprising at least one control circuit (19) connected to said light source by at least one corresponding cable (18).

11. Item according to any one of the preceding claims, wherein said at least one luminous duct (6) comprises at least one second luminous portion (21) arranged at a distal position from said at least one through opening (3), said at least one second luminous portion (21) being not visible from said at least one through opening (3) from a side of said outer layer (2) corresponding to said outer face (4).

12. Item according to any one of the preceding claims, wherein said inner face (5) of said outer layer (2) is constituted by a waterproof material in at least one portion surrounding said at least one through opening (3), wherein preferably said at least one protective element (8) is hermetically sealed to said at least one portion made of waterproof material of said inner face (5), wherein more preferably said inner face (5) of said outer layer (2) is fully constituted by a waterproof material.

13. Item according to any one of the preceding claims, comprising an inner layer (22) combined with said inner face (5) of said outer layer (2), wherein preferably said at least one luminous duct (6) comprises at least one third luminous portion (23) visible from one side of said inner layer (22) opposite said outer layer (2), said inner layer (22) being provided with at least one window or comprising a plurality of inner layer portions that leave uncovered at least one portion of said inner face (5) of said outer layer (2) at said at least one third luminous portion (23).

14. Item according to any one of the preceding claims, comprising fastening means adapted to constrain said at least one luminous duct (6) to said inner face (5) of said outer layer (2), wherein said fastening means preferably comprise at least one fastening element (24; 25) comprising, or consisting of, a strip of fabric or polymeric material.

15. Item according to claim 14, wherein said strip of fabric or polymeric material is folded on itself and constrained to said inner face (5) of said outer layer (2) in order to form a sleeve, wherein said sleeve is engaged by said at least one luminous duct (6), or wherein said strip of fabric or polymeric material has a face constrained at opposite edges to said inner face (5) of said outer layer (2) and is provided with at least two through holes (26) engaged by said at least one luminous duct (6).

16. Item according to any one of the preceding claims, wherein said item is selected from the group comprising clothing items, clothing accessories, footwear, preferably wherein said item is a blazer, a heavy jacket, a lightweight jacket, a coat, a sleeveless garment, a waistcoat, trousers, a tracksuit, a head gear, a glove, a shoe.

## Patentansprüche

1. Leuchtender Kleidungsartikel (1) umfassend:
eine Außenschicht (2), die mit mindestens einer Durchgangsöffnung (3) versehen ist, die sich zwischen einer Außenfläche (4) und einer Innenfläche (5) der Außenschicht (2) erstreckt,
mindestens eine mit der Innenfläche (5) der Außenschicht (2) kombinierte Leuchtleitung (6), die mindestens einen ersten Leuchtabschnitt (7) aufweist, der zumindest teilweise im Bereich der mindestens einen Durchgangsöffnung (3) angeordnet ist, und
mindestens ein für das von der mindestens einen Leuchtleitung (6) ausgestrahlte Licht zumindest teilweise transparentes Schutzelement (8), das mit der Außenschicht (2) kombiniert und zum Verschließen der mindestens einen Durchgangsöffnung (3) angeordnet ist, **dadurch gekennzeichnet, dass**
das mindestens eine Schutzelement (8) wasserdampfdurchlässig ist.

2. Artikel nach Anspruch 1, wobei das mindestens eine Schutzelement (8) mindestens eine erste Schicht (9) aus einem natürlichen oder synthetischen Material umfasst.

3. Artikel nach Anspruch 2, wobei die mindestens eine erste Schicht (9) ein atmungsaktives Gewebe oder eine wasserdichte und atmungsaktive Membran ist, vorzugsweise aus Polyamid oder expandiertem Polytetrafluoräthylen (ePTFE), Polyurethan oder dergleichen.

4. Artikel nach Anspruch 2 oder 3, wobei das mindestens eine Schutzelement (8) eine zweite Schicht (10) umfasst, die mit der mindestens einen ersten Schicht (9) kombiniert ist, wobei die zweite Schicht (10) aus einem wasserdichten und atmungsaktiven Material gebildet ist, wobei vorzugsweise die mindestens eine erste Schicht (9) und die zweite Schicht (10) distal von bzw. proximal zu dem mindestens einen ersten Leuchtabschnitt (7) der mindestens einen Leuchtleitung (6) angeordnet sind, wobei weiter bevorzugt die mindestens eine erste Schicht (9) aus Polyamid mit einer Dichte zwischen 120 g/m² und 140 g/m² oder aus expandiertem Polytetrafluoräthylen (ePTFE) besteht und/oder die zweite Schicht (10) aus expandiertem Polytetrafluoräthylen (ePTFE), Polyurethan oder dergleichen besteht.

5. Artikel nach einem der vorhergehenden Ansprüche, wobei das mindestens eine Schutzelement (8) weniger als 50 % der von dem mindestens einen ersten Leuchtabschnitt (7) emittierten Lichtstrahlung absorbiert, vorzugsweise weniger als 40 % der von dem mindestens einen ersten Leuchtabschnitt emittierten Lichtstrahlung.

6. Artikel nach einem der vorhergehenden Ansprüche, umfassend mindestens ein reflektierendes Element (11), das auf einer Seite des mindestens einen ersten Leuchtabschnitts (7) der mindestens einen Leuchtleitung (6) dem mindestens einen Schutzelement (8) gegenüberliegend angeordnet ist, wobei das mindestens eine reflektierende Element (11) eine reflektierende Fläche (12) aufweist, die das Licht reflektiert, das von dem mindestens einen, der mindestens einen Durchgangsöffnung (3) zugewandten ersten Leuchtabschnitt (7) emittiert wird.

7. Artikel nach Anspruch 6, wobei das mindestens eine reflektierende Element (11) im Bereich der jeweiligen Ränder entweder an der Innenfläche (5) der Außenschicht (2) oder an dem mindestens einen Schutzelement (8) befestigt ist, wodurch ein Raum (13) gebildet wird, in dem der mindestens eine erste Leuchtabschnitt (7) aufgenommen ist.

8. Artikel nach einem der vorhergehenden Ansprüche, wobei der mindestens eine erste Leuchtabschnitt (7) im Wesentlichen zylindrisch oder halbzylindrisch ist, wobei vorzugsweise der mindestens eine erste Leuchtabschnitt (7) einen Durchmesser größer als 2 mm, bevorzugter größer als 2,5 mm, noch bevorzugter gleich oder größer als 3 mm aufweist.

9. Artikel nach einem der vorhergehenden Ansprüche, wobei die mindestens eine Leuchtleitung (6) einen Stecker (16) und eine dem Stecker zugeordnete Lichtquelle (17) umfasst und die beide an einem Ende der mindestens einen Leuchtleitung (6) angeordnet sind, wobei die Lichtquelle (17) vorzugsweise mindestens eine LED umfasst.

10. Artikel nach Anspruch 9, umfassend mindestens einen Steuerschaltkreis (19), der mit der Lichtquelle durch mindestens ein entsprechendes Kabel (18) verbunden ist.

11. Artikel nach einem der vorhergehenden Ansprüche, wobei die mindestens eine Leuchtleitung (6) mindestens einen zweiten Leuchtabschnitt (21) umfasst, der an einer von der mindestens einen Durchgangsöffnung (3) distalen Position angeordnet ist, wobei der mindestens eine zweite Leuchtabschnitt (21) nicht von der mindestens einen Durchgangsöffnung (3) von einer der Außenfläche (4) entsprechenden Seite der Außenschicht (2) aus sichtbar ist.

12. Artikel nach einem der vorhergehenden Ansprüche, wobei die Innenfläche (5) der Außenschicht (2) aus einem wasserdichten Material in mindestens einem Abschnitt besteht, der die mindestens eine Durchgangsöffnung (3) umschließt, wobei vorzugsweise das mindestens eine Schutzelement (8) hermetisch mit dem mindestens einen aus wasserdichtem Material bestehenden Abschnitt der Innenfläche (5) versiegelt ist, wobei noch bevorzugter die Innenfläche (5) der Außenschicht (2) vollständig aus einem wasserdichten Material besteht.

13. Artikel nach einem der vorhergehenden Ansprüche, umfassend eine mit der Innenfläche (5) der Außenschicht (2) kombinierte Innenschicht (22), wobei vorzugsweise die mindestens eine Leuchtleitung (6) mindestens einen dritten Leuchtabschnitt (23) umfasst, der von einer der Außenschicht (2) gegenüberliegenden Seite der Innenschicht (22) her sichtbar ist, wobei die innere Schicht (22) mit mindestens einem Fenster versehen ist oder eine Vielzahl von Innenschichtabschnitten aufweist, die mindestens einen Abschnitt der Innenfläche (5) der Außenschicht (2) im Bereich des mindestens einen dritten Leuchtabschnitts (23) unbedeckt lassen.

14. Artikel nach einem der vorhergehenden Ansprüche, umfassend Befestigungsmittel, die geeignet sind, den mindestens einen Leuchtkanal (6) mit der Innenfläche (5) der Außenschicht (2) zu verbinden, wobei die Befestigungsmittel vorzugsweise mindestens ein Befestigungselement (24; 25) umfassen, das einen Streifen aus Gewebe oder polymerem Werkstoff umfasst oder daraus besteht.

15. Artikel nach Anspruch 14, wobei der Streifen aus Gewebe oder polymerem Werkstoff auf sich selbst gefaltet und mit der Innenfläche (5) der Außenschicht (2) verbunden ist, um eine Hülse zu bilden, wobei in die Hülse der mindestens eine Leuchtkanal (6) eingreift, oder wobei der Streifen aus Gewebe oder polymerem Werkstoff eine Fläche aufweist, die an gegenüberliegenden Rändern mit der Innenfläche (5) der Außenschicht (2) verbunden ist und mit mindestens zwei Durchgangslöchern (26) versehen ist, in die der mindestens eine Leuchtkanal (6) eingreift.

16. Artikel nach einem der vorhergehenden Ansprüche, wobei der Artikel aus der Gruppe ausgewählt ist, die Kleidungsartikel, Bekleidungszubehör und Fußbekleidung umfasst, wobei der Artikel vorzugsweise ein Blazer, eine schwere Jacke, eine leichte Jacke, ein Mantel, ein ärmelloses Kleidungsstück, eine Weste, eine Hose, ein Trainingsanzug, eine Kopfbedeckung, ein Handschuh und ein Schuh ist.

## Revendications

1. Article de vêtement lumineux (1) comprenant:
une couche extérieure (2) pourvue d'au moins une ouverture traversante (3) s'étendant entre une face extérieure (4) et une face intérieure (5) de ladite couche extérieure (2),
au moins un conduit lumineux (6) combiné à ladite face intérieure (5) de ladite couche externe (2) et comportant au moins une première portion lumineuse (7) disposée au moins partiellement au niveau de ladite au moins une ouverture traversante (3), et
au moins un élément de protection (8) au moins partiellement transparent à la lumière émise par ledit au moins un conduit lumineux (6), combiné avec ladite couche extérieure (2) et placé de manière à fermer ladite au moins une ouverture traversante (3), **caractérisé en ce que**
ledit au moins un élément de protection (8) est perméable à la vapeur d'eau.

2. Article selon la revendication 1, dans lequel ledit au moins un élément de protection (8) comprend au moins une première couche (9) faite d'un matériau naturel ou synthétique.

3. Article selon la revendication 2, dans lequel ladite au moins une première couche (9) est un tissu transpirant ou une membrane imperméable et transpirante, de préférence en polyamide ou en polytétrafluoroéthylène expansé (ePTFE), en polyuréthane ou similaire.

4. Article selon la revendication 2 ou 3, dans lequel ledit au moins un élément de protection (8) comprend une deuxième couche (10) combinée avec ladite au moins une première couche (9), dans lequel ladite deuxième couche (10) est constituée d'un matériau imperméable et transpirant, dans lequel de préférence ladite au moins une première couche (9) et ladite deuxième couche (10) sont respectivement distale et proximale de ladite au moins une première portion lumineuse (7) dudit au moins un conduit lumineux (6), dans lequel plus préférablement ladite au moins une première couche (9) est constituée de polyamide avec une densité entre 120 g/m² et 140 g/m² ou de polytétrafluoroéthylène expansé (ePTFE) et/ou ladite deuxième couche (10) est constituée de polytétrafluoroéthylène expansé (ePTFE), de polyuréthane ou similaire.

5. Article selon l'une quelconque des revendications précédentes, dans lequel ledit au moins un élément de protection (8) absorbe moins de 50% du rayonnement lumineux émis par ladite au moins une première portion lumineuse (7), de préférence moins de 40% du rayonnement lumineux émis par ladite au moins une première portion lumineuse.

6. Article selon l'une quelconque des revendications précédentes, comprenant au moins un élément réfléchissant (11) disposé sur un côté de ladite au moins une première portion lumineuse (7) dudit au moins un conduit lumineux (6) en face dudit au moins un élément de protection (8), dans lequel ledit au moins un élément réfléchissant (11) présente une face réfléchissante (12) qui réfléchit la lumière émise par ladite au moins une première portion lumineuse (7) qui est orientée vers ladite au moins une ouverture traversante (3).

7. Article selon la revendication 6, dans lequel ledit au moins un élément réfléchissant (11) est contraint au niveau de bords respectifs à ladite face intérieure (5) de ladite couche extérieure (2) ou audit au moins un élément de protection (8), formant ainsi un compartiment (13) dans lequel est logée ladite au moins une première portion lumineuse (7).

8. Article selon l'une quelconque des revendications précédentes, dans lequel ladite au moins une première portion lumineuse (7) est sensiblement cylindrique ou semi-cylindrique, dans lequel de préférence ladite au moins une première portion lumineuse (7) a un diamètre supérieur à 2 mm, plus préférablement supérieur à 2,5 mm, plus préférablement encore égal ou supérieur à 3 mm.

9. Article selon l'une quelconque des revendications précédentes, dans lequel ledit au moins un conduit lumineux (6) comprend un connecteur (16) et une source lumineuse (17) combinée avec ledit connecteur, qui sont tous deux disposés à une extrémité dudit au moins un conduit lumineux (6), dans lequel de préférence ladite source lumineuse (17) comprend au moins une LED.

10. Article selon la revendication 9, comprenant au moins un circuit de commande (19) connecté à ladite source lumineuse par au moins un câble correspondant (18).

11. Article selon l'une quelconque des revendications précédentes, dans lequel ledit au moins un conduit lumineux (6) comprend au moins une deuxième portion lumineuse (21) disposée dans une position distale de ladite au moins une ouverture traversante (3), ladite au moins une deuxième portion lumineuse (21) n'étant pas visible depuis ladite au moins une ouverture traversante (3) depuis un côté de ladite couche externe (2) correspondant à ladite face extérieure (4).

12. Article selon l'une quelconque des revendications précédentes, dans lequel ladite face intérieure (5) de ladite couche extérieure (2) est constituée d'un matériau imperméable dans au moins une portion entourant ladite au moins une ouverture traversante (3), dans lequel de préférence ledit au moins un élément de protection (8) est hermétiquement scellé à ladite au moins une portion en matériau imperméable de ladite face intérieure (5), dans lequel plus préférablement ladite face intérieure (5) de ladite couche extérieure (2) est entièrement constituée d'un matériau imperméable.

13. Article selon l'une quelconque des revendications précédentes, comprenant une couche intérieure (22) combinée avec ladite face intérieure (5) de ladite couche extérieure (2), dans lequel de préférence ledit au moins un conduit lumineux (6) comprend au moins une troisième portion lumineuse (23) visible d'un côté de ladite couche intérieure (22) opposé à ladite couche extérieure (2), ladite couche intérieure (22) étant pourvue d'au moins une fenêtre ou comprenant une pluralité de portions de couche intérieure qui laissent à découvert au moins une portion de ladite face intérieure (5) de ladite couche extérieure (2) au niveau de ladite au moins une troisième portion lumineuse (23).

14. Article selon l'une quelconque des revendications précédentes, comprenant moyens de fixation adaptés pour contraindre ledit au moins un conduit lumineux (6) à ladite face intérieure (5) de ladite couche extérieure (2), lesdits moyens de fixation comprenant de préférence au moins un élément de fixation (24; 25) comprenant, ou consistant en, une bande de tissu ou de matériau polymère.

15. Article selon la revendication 14, dans lequel ladite bande de tissu ou de matériau polymère est pliée sur elle-même et contrainte à ladite face intérieure (5) de ladite couche extérieure (2) afin de former un manchon, dans lequel ledit manchon est engagé par ledit au moins un conduit lumineux (6), ou dans lequel ladite bande de tissu ou de matériau polymère présente une face contrainte à ladite face intérieure (5) de ladite couche extérieure (2) au niveau de bords opposés et est pourvue d'au moins deux trous traversants (26) engagés par ledit au moins un conduit lumineux (6).

16. Article selon l'une quelconque des revendications précédentes, dans lequel ledit article est choisi dans le groupe comprenant articles de vêtement, accessoires vestimentaires, chaussures, de préférence dans lequel ledit article est une veste, un blouson chaud, une veste légère, un manteau, un vêtement sans manches, un gilet, un pantalon, un survêtement, un couvre-chef, un gant, une chaussure.
